# EUROPEAN PATENT SPECIFICATION

(11) **EP 0 654 797 B1**
(45) Date of publication and mention of the grant of the patent: **11.12.1996**
(21) Application number: 94203503.1
(22) Date of filing: 09.05.1990
(51) Int. Cl.: H01B 7/28, H01B 3/44, C08K 5/00, H02G 15/076, H02G 15/00, H02G 15/10

(54) **Felt material impregnated by an acid scavenger**
Mit einem Säurefänger impregniertes Filzmaterial
Feutre imprégné d'un éliminateur d'acide

(30) Priority: 10.05.1989 US 350657; 10.10.1989 US 419408
(43) Date of publication of application: 24.05.1995
(62) Divisional of application: 90908352.9
(73) Proprietor: RAYCHEM CORPORATION, Menlo Park California 94025 (US)
(72) Inventor: Dawes, Keith, Raleigh, North Carolina 27615 (US); Hunter, Thomas A., Raleigh, North Carolina 27614 (US); Holt, Neil L., Redwood City, California 94063 (US)
(74) Representative: Benson, John Everett

(56) References cited:
- DE-A- 3 017 442
- PATENT ABSTRACTS OF JAPAN vol. 14, no. 470 (C-769) 15 October 1990 & JP-A-02 191 775 (SHINKO KAGAKU) 27 July 1990
- DATABASE WPI Section Ch, Derwent Publications Ltd., London, GB; Class A17, AN 82-88661E & JP-A-57 145 136 (FURUKAWA ELECTRIC) 8 September 1982

## Description

### Field of the Invention

This invention relates to articles for preventing oxidative degradation (deterioration) of antioxidant containing polyolefin insulation on electrical conductors such as telephone cables and electric power cables.

### Background of the Invention

Conventionally, to protect polyolefins, such as polyethylene, polypropylene and their various copolymers, it is known in the plastics industry to add antioxidant material during manufacture or processing of the polyolefin resin. The material often consists of mixture of additives each of which may inhibit oxidation of the resin in similar or in different ways. These antioxidant material(s) prevent degradation of the resin during, for example, high temperature extrusion of the insulation over a wire conductor to form the insulated wire. These antioxidant (also known as stabilizer) material(s) also help prevent cracking and peeling of the insulation, and other ill effects, during the service life of the insulated wire and/or cable. Such degradation can occur as a result of long exposure to the atmosphere even at relatively modestly elevated temperatures of 40° to 90°C. The most commonly used antioxidant materials include phenolic type antioxidants (often called primary antioxidants), which are often combined with a peroxide decomposer (a so-called synergist or secondary antioxidant). These materials, if used, each typically comprise about 0.1% by weight of the insulation.

In more recent years, it has been discovered that the copper conductor in many cables has a catalytic effect on the oxidation process that thereby promotes premature depletion of the antioxidant composition. To counter this effect, so called metal deactivators (often designed to counter the specific effect of copper catalysis) are now frequently added to the polyolefin resin during manufacture. Also, the color pigments in many cables often have a catalytic effect on the oxidation that promotes degradation (as evidenced by embrittlement and cracking or peeling of the insulation).

For these and other reasons, many cables, particularly those sections placed in telephone pedestal and aerial enclosures, have been found to deteriorate in service at a considerably more rapid rate than originally anticipated. An excellent review of the historical development of this problem is contained is "Cracking of Foamskin Polyethylene Insulations in Pedestals" by T. N. Bowmer, International Wire and Cable Symposium Proceedings 1988, Pages 475 to 485. In the Introductory section of this paper, it is stated (reference numbers have been omitted):

"In the 1960-70s, catastrophic cracking occurred in low density polyethylene (LDPE) insulations. Such deterioration occurred in as little as 3-4 years in the southwestern United States. Extensive work showed that not only was stabilizer loss and oxidation accelerated by high temperatures, but also the copper conductor catalyzed the oxidation. Consequently, the insulation material was changed to high density polyethylene (HDPE), a less volatile antioxidant was used and a metal deactivator added. The procedures developed during this time for oxidative testing of insulated wires and polyolefin compositions form the basis of the stability requirements for today's cables.

Concomitant with these material changes, water resistant PIC cable was introduced into the buried plant environment in 1972. This involved filling the cable with a waxy hydrocarbon material. Polypropylene (PP) insulations were initially used in these cable, but were found to suffer premature embrittlement and failure also and were replaced by a foam-skin HDPE design in 1976 that incorporated an inner coating of foamed HDPE with an outer coating of solid HDPE. These insulations were expected, from previous research, to last greater than 40 years in the pedestal environment without trouble, although some accelerated testing results predicted only a 10-15 year lifetime.

Foam-skin HDPE insulations placed in service in 1976-80, have begun to crack in closures in southern Arizona and New Mexico. There have even been reports of cracking in cables of later vintage in Phoenix. The concern is that such failures are again caused by stabilizer depletion. Based on the LDPE experience, the southwest is a harbinger on what can be expected in the rest of the country, since the high temperatures and long summers of the southwest greatly accelerate thermal oxidation and stabilizer loss inside pedestal closures. These concerns are further magnified by the quantities of foam-skin insulations that have accumulated in the field over the last 12 years."

On Page 482 the Bowmer reference further indicates that antioxidant booster sprays and pucks (that is, puck shaped resin objects that contain of the order of 5% of a somewhat volatile antioxidant composition) have been placed in pedestals in attempts to increase the service life of installed at risk cables. It notes that the best repair, short of replacement, for the cables at risk consists of an internal airtight closure that minimizes oxygen infiltration and stabilizer evaporation.

Thus, the problem of wire insulation embrittlement, cracking and peeling, especially when placed in pedestal enclosures has persisted since at least the mid 1960's despite numerous attempts at solutions of the problem and several changes in the approved telephone cable insulation materials and constructions, the purpose of these changes inter alia being to overcome this problem.

US-A-4399602 discloses the use of an enclosure to surround a cable splice in a telecommunications cable insulated with polyethylene. Derwent abstract WP1 AN 82-88661E of JP-A-57145136 discloses a homogeneous polyolefin insulating composition which is stated to be non corrosive. The composition contains various additives such as zinc oxide and antioxidant.

### Summary of the Invention

We have found that even when these cable insulations are surrounded by airtight enclosures, such a as heat-shrinkable cable splice or bolt together cable splice protectors, degradation of the wire and/or cable insulation still occurs. We have further unexpectedly discovered that this surprising result is the result of a hitherto unrecognized interaction between certain components of the pedestal or aerial closure environment and one or more of the stabilizer components present in the insulation. This interaction we believe results in the direct degradation of one or more of the antioxidant components. We have found that this interaction does proceed even in an atmosphere substantially devoid of oxygen indicating that the said degradation is nonoxidative. Briefly, we have unexpectedly and surprisingly discovered that acidic emanations from certain closure materials occurs at ambient temperature from, for example, the enclosure for cable splices or other components within the enclosure, the splice connections or even in the spliced area of the cable, interact with one or more components of the antioxidant compositions used in insulated telephone conductors such that the effectiveness of the said one or more components of the antioxidant composition is substantially destroyed.

The invention further provides an article comprising:
a felt material; and
a concentration of acid scavenger of from 0.001 grams per square inch (g/in²) (1.55 g/m²) to 1.0 g/in² (1550g/m²) adsorbed or absorbed into or onto the felt. Preferably the felt is a polyolefin felt. The article preferably further includes an antioxidant absorbed or adsorbed onto or into the felt in an amount of from 0.001g/in² (1.55g/m²) to 1.0 g/in² (1550 g/m²).

### Brief Description of the Drawings

Figure 1 illustrates a cross-sectional view of a spliced cable surrounded by an airtight enclosure.

Figure 2 illustrates a cross-sectional view of an end cap.

Figure 3 illustrates an aerial closure for a telecommunications splice including drop wires.

Figure 4 illustrates a side elevational view partially in cross-section of a pedestal cap.

Figure 5 illustrates a top view of a sheet suitable for forming an enclosure bag associated with, e.g., absorbed or adsorbed on, a containing media.

Figure 6 illustrates cross-sectional view of two sheets according to Figure 5 bonded together to form an enclosure, e.g., a bag, to surround a polyolefin wire or cable incorporating embodiments of the present invention.

### Detailed Description of the Invention

This invention involves, among other factors, the surprisingly unexpected observation that acidic vapors such as HCl, acetic acid, and the like, and volatile materials from crosslinked elastomers and plastics within the enclosure especially those from the degradation of halogenated plastic materials such as polyvinyl chloride significantly reduces the effectiveness of the stabilizers of the polyolefin such as polyethylene wire sheath even at ambient temperatures, e.g., daylight temperatures, to cause or permit the cracking of the insulation and premature degradation of the wire insulation. In addition, the copper core apparently enhances this degradation process.

The rate of this process can be markedly reduced by incorporating an acid/volatile component scavenger into the enclosure either through a felt material with the scavenger adsorbed or absorbed thereon to prevent acid/volatile vapor attack on the insulated cable, e.g., polyethylene insulation. Suitable enclosures are made of polyolefin material such as polyethylene or polypropylene, and the like, with butyl tape and/or metal containers with nonhalogenated sealing gaskets or other sealing material which produce volatile degradative vapors.

More specifically, halogenated polymers such as polyvinyl chloride (PVC) provide the largest source of acidic degradation by-products, e.g., HCl. PVC is used in many telephone applications such as dropwire insulations, tapes, splice wraps, and closure housings. Literature shows that HCl is a degradation product during long term ambient cyclic heating and ultraviolet radiation exposure. Other sources of volatile degradation products are Silicone RTV®, Polychloroprene (neoprene), epichlorohydrin polyvinyldenechloride. Other materials which affect the cable lifetime include sulfur and peroxide cured materials such as EPDM rubber, EPR rubber, SBR rubber, isoprene rubber, nitrile rubber, and like plastics.

The scavenger materials for both acids and volatile components are referred to for convenience as acid scavengers. The acid scavengers have a sufficiently high surface area, or reactive sites, to absorb, adsorb, or neutralize the deleterous materials produced within the enclosure from degradation, e.g., UV and /or thermal cycling, a low human toxicity, and are unreactive with the wire insulation or the closure system. A single acid scavenger or mixtures thereof can be used. Suitable acid scavengers are selected from metallic oxides, carbonates, hydroxides, amines, stearates, phosphites, sulphates, phosphates, and the like which do not adversely react with the wire insulation or the closure and seals while absorbing, adsorbing, or neutralizing any acid vapors or binding the reactive sites of any volatile degradation substituents from the closure materials. Preferred materials are listed in Table I:

**Table I**

| Acid Scavengers |
|---|
| Zinc oxide |
| Calcium oxide (lime) |
| Dibasic lead phthalate |
| Sodium carbonate |
| Calcium carbonate |
| Sodium hydroxide (Ascarite®) |
| Sodium bicarbonate |
| Calcium hydroxide |
| Ammonia; amines |
| Epoxy compounds |
| (epoxidized soybean oil) |
| Barium, cadmium, zinc stearates |
| (or other carboxylates) |
| Dibasic lead phosphite |
| Tribasic lead sulphate |
| Sodium phosphate |
| Dialkyl tindichloride |

Of these acid scavengers, those having a pH greater than about 5, i.e., more alkaline, are particularly preferred materials and can be selected from the group listed in Table II:

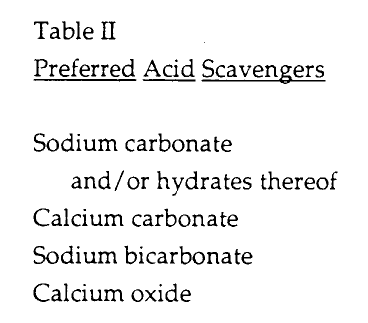

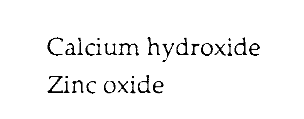

These acid scavengers may also be beneficially associated either in a separate means or together with antioxidants, such as one or more of the compounds listed in Table III:

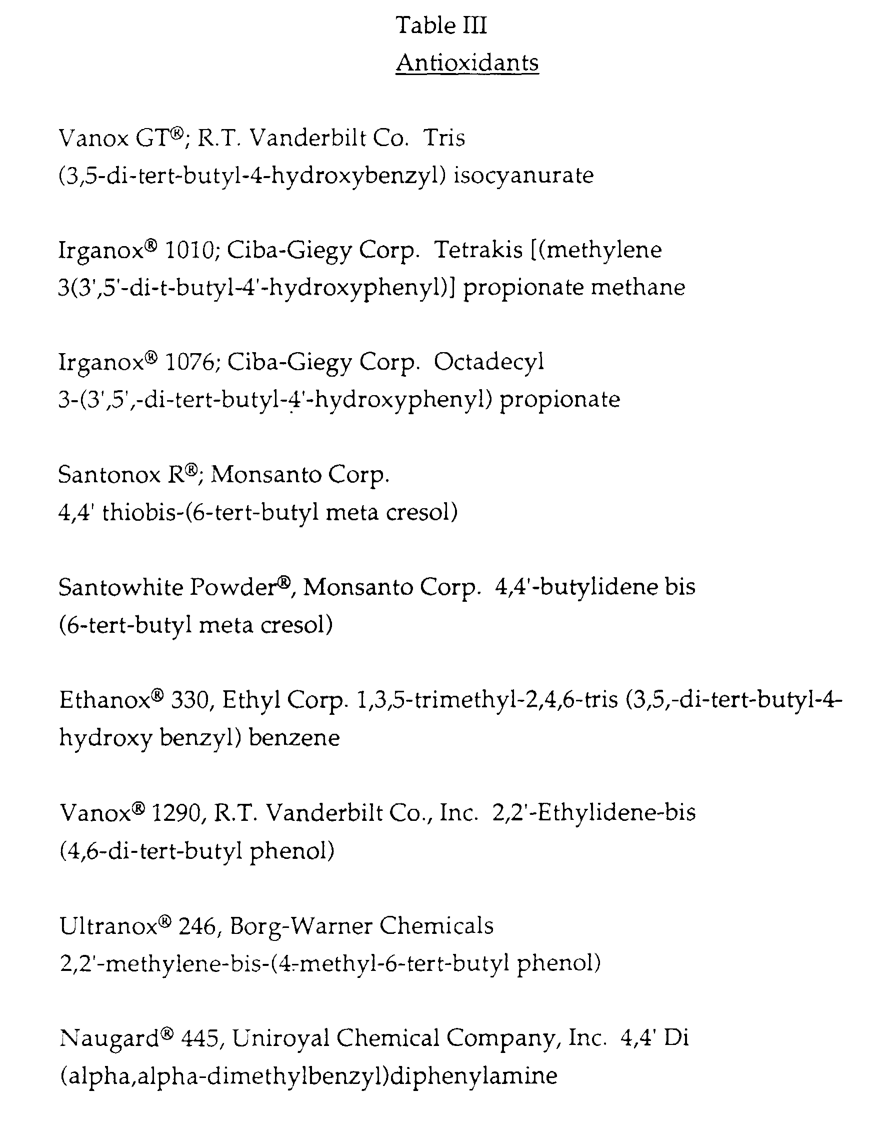

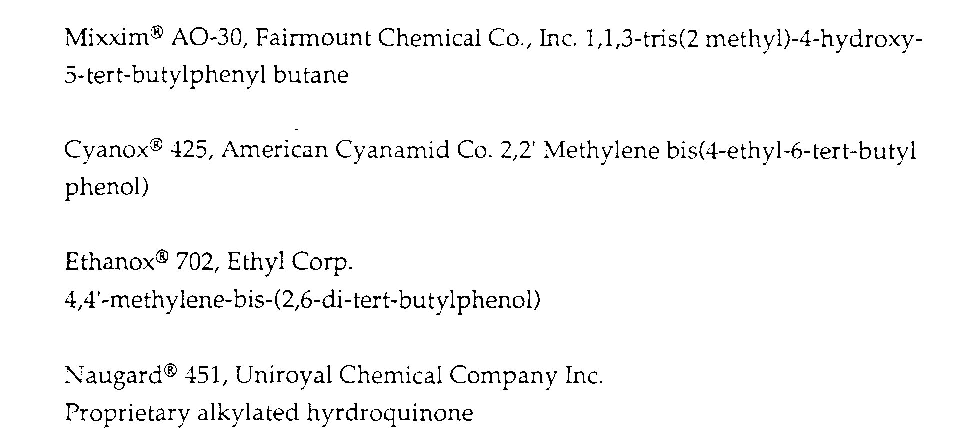

Of these antioxidants, those particularly preferred can be selected from the group listed in Table IV:

**Table IV**

| Preferred Antioxidants |
|---|
| Santowhite Powder®, Monsanto |
| Santonox R®, Monsanto |
| Ethanox® 330, Ethyl Corp. |
| Ethanox® 702, Ethyl Corp. |
| Vanox® 1290, R.T. Vanderbilt Co. |
| Ultranox® 246, Borg-Warner Chemicals |
| Naugard® 451, Uniroyal Chemical Company |
| Naugard® 445, Uniroyal Chemical Company |
| Mixxim® AO-30, Fairmount Chemical Co. |
| Cyanox® 425, American Cyanamid Co. |

Santonox R® is particularly preferred. Optionally, oxygen scavengers can be included alone or with the acid scavengers, acid scavengers and antioxidants, or antioxidants. Suitable oxygen scavengers listed in Table V:

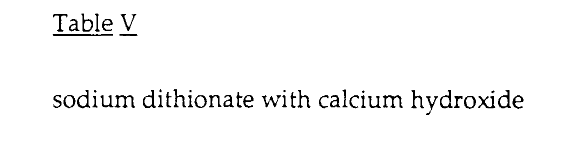

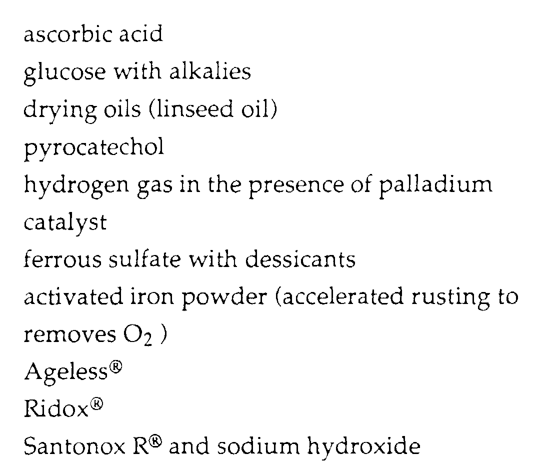

Preferred oxygen scavengers are Ageless®, Rldox®, and Santonox R® plus sodium hydroxide. Dessicants are also beneficial because of the reduction of moisture in the enclosure. Dessicants can be used alone or in combination with acid scavengers, antioxidants, or oxygen scavengers. Suitable dessicants are Drierite® and the like. The combination of an acid scavenger, such as Ascarite®, and an antioxidant such as Santonox R®, is especially preferred.

An effective amount of acid scavenger is used to retard wire or cable insulation degradation. This is calculated to be an amount equal to or greater than the stochiometric amount of acid scavenger for the amount of vapor or deleterious volatile component given off by the enclosure materials or from air exposure. More specifically, the acid scavenger or mixtures thereof are from about 0.0005 to about 4.0 grams of acid scavenger per gram of cable or wire insulation. Preferably about 0.005 to about 2.0 grams and most preferably about 0.01 to about 1.0 grams acid scavenger per gram cable insulation. Of course, the lower the concentration of deleterious materials in the enclosure, the lower the required concentration of the acid scavenger. Concentrations of antioxidant are from about 0.01 to about 0.5, and preferably about 0.05 to about 0.2 grams antioxidant per gram cable insulation. When employed, oxygen scavengers are present in an amount sufficient to reduce the O₂ level in an air-tight sealed enclosure to a level of about 0.1% oxygen.

The acid scavengers as well as the oxygen scavengers and the antioxidants are incorporated into the closure through a felt material on the interior of the closure so as to create and maintain a substantially acid-free atmosphere in the enclosure.

Although the invention functions best in a sealed system, beneficial results may be obtained in closures such as aerial closures or pedestal caps which have limited air circulation. In addition, the invention can be used with both air core cable and blocked or greased-filled cable at the point where the cable is split open exposing the fine individual wires of the larger cable.

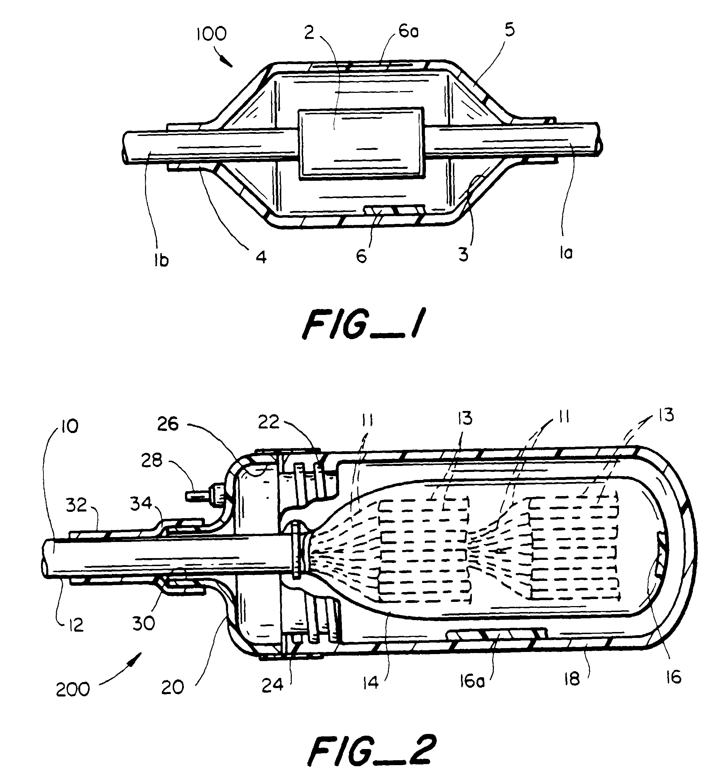

Having described the broadest aspects of the invention, more particular embodiments are illustrated by discussion of the figures. Figure 1 illustrates a recoverable article 100 for encapsulating a cable splice 2. The enclosure 100 includes a recoverable sleeve as taught in U.S. Patent 4,626,458. The enclosure 100 includes a recoverable sleeve 5 alone or with a recoverable fabric surrounding a liner 3. The sleeve 5 is comprised of a material such as a recoverable polyethylene material alone or in a fabric form. The sleeve 5 and the liner 3 protect the cable splice 2. The liner 3 is fabricated from metal, cardboard, polymeric foam material, and the like. The fine wires within the splice 2 are beneficially protected by including an acid scavenger 6 either as a separate member within the liner 3 or incorporated into the sleeve 5 having porous access through liner 3 to the splice 2 of cable 1a and 1b.

Although sealed cable closures 100 are used primarily in buried and aerial applications requiring infrequent reentry, occasionally more frequent access to the individual wires in the cable may be required. For these purposes the apparatus illustrated in Figures 2, 3, and 4 are often employed. Figure 2 illustrates an apparatus known as an end cap 200 as described in U.S. Patent 4,379,602 . A cable 10 having outer insulation 12 is brought into an end piece where the individual conductors 11 are exposed for splicing or separation as illustrated by 13. The fine wires 11 contained in the suitable airtight bag 14 in which optionally the acid scavenger 16 may be incorporated. In other embodiments, the bag 14 may be somewhat permeable which permits the incorporation of the acid scavenger in the interior of the outside of an end cap 18 illustrated as 16a. The end cap 18 is threadedly engaged to a base member 20 by threads 22 and the two pieces are sealed together by tape or a heat-shrinkable polyethylene sealing ring 24. The base 20 has a broader section 26 than the threaded portion 22 to permit the mating of the cap 18 to the base 20. The base 20 includes a valve 28 for pressure testing the device and is affixed to the cable 0 at jacket 12 through a heat-shrinkable sleeve 32 accommodating the narrow end of the base 20 at 30 by a heat-shrinkable fitting 34. Of course, the end cap can be affixed by any other suitable means such as tape but preferably butyl tape rather than polyvinyl chloride tape, or any suitable grommet and gasket arrangement. An additional acid scavenger solution can be sprayed on the fine wires 11. Alternatively, the liner bag 14 can incorporate a suitable layer incorporating a volatile acid scavenger on the interior surface thereof to protect the wires.

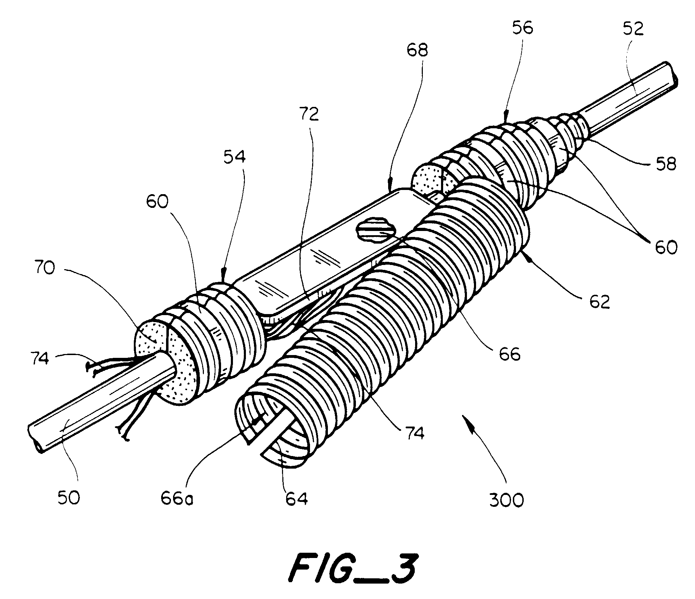

Figure 3 illustrates an aerial closure embodiment of the invention used to splice two cables 50 and 52 together. The cables 50 and 52 are normally spliced together across a cable splice area 68 permitting the drop wire 74 to be withdrawn therefrom. On opposite sides of the splice area the cable includes suitable sealing means 54 and 56 such as gel-filled enclosures as taught in U.S. Patent 4,701,574. Optionally, the seals can include a tapered portion 58 and means to maintain sealing gel 70 under compression against the cable within the sealing means 54 such as tie wraps. Between end pieces 54 and 56 will be a corrugated cover 62 split at 64 to permit its spreading and insertion over ends 54 and 56. Although not necessary, the corrugations on 62 match the corrugations on 52 and 54 to help affix the jacket 62 thereto. Optionally, the closure 300 can be fabricated without corrugations and permit a friction fit between pieces 54 and 56. Suitable locking means such as screws or clips are incorporated at the split end 64, not illustrated, to hold the sealing tube 62 in place. The acid scavenger, antioxidant, oxygen scavenger, or mixtures thereof can be sprayed on the inside of the tubular member 62 as illustrated in 66a or presented as a concentrated block of material 66 adjacent the splice area, or built into housing or gel or bond bar jacket. More generally, the acid scavenger or mixture of degradation components can be incorporated anywhere in the closure system provided it provides a source of protection for the wire insulation.

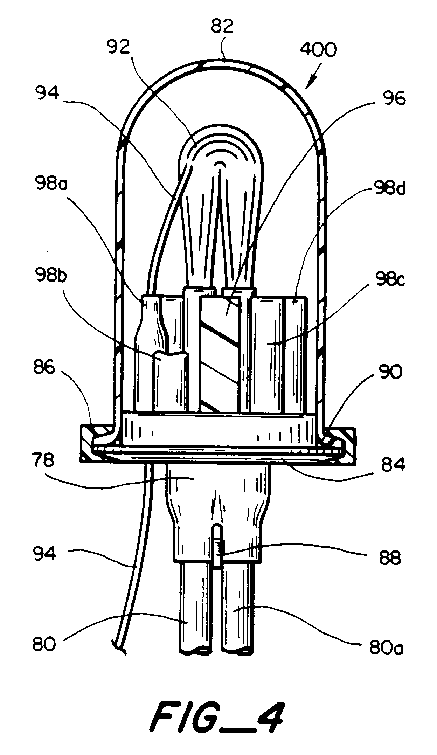

Figure 4 illustrates a pedestal 400 of UK 2,120,486B, used when a cable 80 having a plurality of wires 94 needs constant reentry to add subscribers to the network. The cable 80 enters the bottom of the pedestal 84 where the outer sheath is removed to expose inner conductors 92 and is bent around in a u-shaped configuration to exit through the base 84 with cable 80a. The cable 80/80a is sealed into the base 84 through a heat-shrinkable plastic or other suitable sealing means 78 including a clip 88 to form a conduit for the bend around cable 80/80a. The base is connected to a reenterable dome 82 by a sealing clamp 86 and o-ring seal 90. From the exposed inner wire in the cable 80 a dropwire 94 exits through a heat-shrinkable member 98a. 98a is in the shrunken sealing configuration as illustrated whereas 98b, c, and d expose shrinkable conduits prior to shrinking.

Incorporated within the closure 400, and forming part of the base member 84 is an appropriately sized block 96 comprising an acid scavenger(s) optionally also including antioxidants oxygen scavengers, dessicants, or mixtures thereof. The composition of the material is selected so as to provide a substantially acid/volatile free atmosphere within the dome closure 82 upon thermal cycling of the pedestal cap 400 due to ambient temperature changes. In selecting the amount of material 96, wire insulation surface area and the number of exposed wires 92 are determined. Preferably, in the closure 400 as well as closures 100, 200, and 300, halogenated material such as polyvinyl chloride or other sealing materials such as neoprene, DR tape, and silicone sealants less than fully cured are severely limited, or most preferably, excluded from the enclosure.

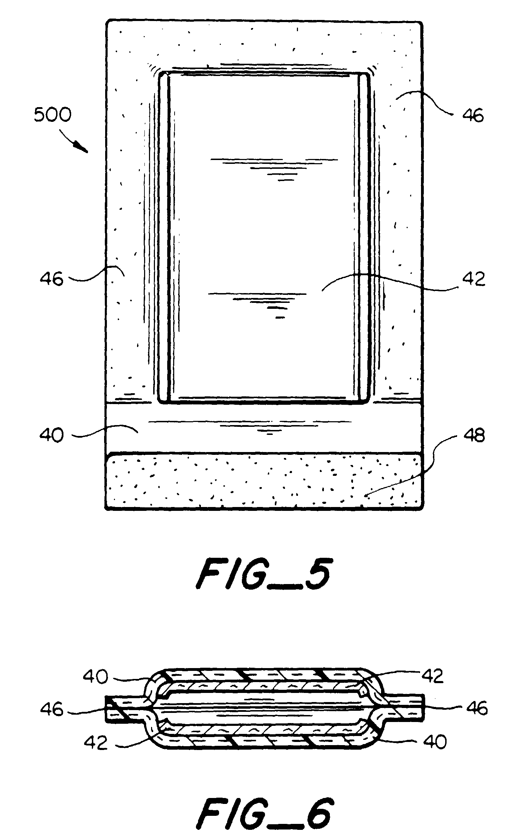

Figures 5 and 6 illustrate preferred liner embodiments suitable for use in telecommunications or electrical enclosures containing polyolefin wires. Preferred enclosure aerial and pedestal systems are disclosed in U.S. Patents 4962286 and 4982054.

More specifically, Figure 6 is a cross-section of two assembled sheets of Figure 5. Alternatively, Figure 5 edges can be folded over on itself to form Figure 6 instead of employing two Figure 5 sheets. Assembly of the enclosure around a suitably sized mandrel is a preferred fabrication procedure.

The wire of cable sheet enclosure 500 includes a moisture vapor transmission (MVT) sheet 40. Suitable sheets are disclosed in the preceding applications. Generally the sheets include a metallic foil layer attached to or sandwiched between plastic layers. suitable materials are Mylar®, Valeron® or a layer of nylon, polypropylene, polyethylene, polyester, and the like bonded to a metal foil such as aluminium optionally including an additional layer of plastic bonded to the metal film. The metal film can be any material which prevents the ingress of moisture into the enclosure. In environments where MVT is not critical, the metal layer is optional. The edges of the sheet 40 include a heat sealable material 46 such as the plastic itself or a hot melt adhesive. Cold bonding adhesives such as epoxies, cyanoacrylates, and the like are also suitable. The central region of the sheet 40 contains a suitable material 42 such as felt, cloth, and the like, which contains the acid scavenger or acid scavenger along with antioxidants, dessicants, oxygen scavengers, and the like. An acid scavenger-antioxidant combination is, for example, Ca CO³ and Santanox R®, a concentration level of from about 0.01 to about 1.0 grams/sq inch 15,5 - 1550 g/m² and preferably about 0.01 to about 0.5g/in² (15,5 - 775 g/m²) and most preferably about 0.07g/in² ± about 0.01g/in² (108,5 ± 15,5 g/m²) and 0.001g/in² to about 1.0g/in² (1,55 - 1550g/m²) and preferably about 0.01g/in² to about 0.5 g/in² (15,5 - 775g/m²) and most preferably about 0.03g/in² ± about 0.01 g/in² (46,5 ± 15,5 g/m²), respectively.

The absorbant/adsorbant material 42 is adhered to the layer 40 by any suitable means such as glue, fusing, and the like. Preferred materials are felts. A particularly preferred felt is a polyester felt 1/6" (4,2 mm) or less in thickness preferably a 6 dernier 12oz/sq yard (407g/m²) product number #2205 of Pacific States Felt and Mfg. Co., Inc. Hayward, California. Prior to affixing the felt 42, the material is treated with the acid scavenger or acid scavenger-antioxidant combination from a water or alcohol based slury. The concentration is a function of the volume of polyolefin insulation to be protected.

An edge of the sheet 40 contains a sealing means 48 such as a gel as taught in US patents 4,600,261 or 4,634,207. The sealing gels disclosed in U.S. Patents 4962286 and 4982054 are also suitable. The sealing edge 48 seals around the wires or cable in a reusable fashion. Of course glues or mastics are suitable if reenterability is not desired.

Upon completion. the sheet 40 is either folded over to seal and form a bag like enclosure or sealed to a similar sheet so that the felt 42 of one sheet faces the felt of the other sheet. If the outer enclosure 100, 200, 300, 400 and the like provided sufficient protection then the bag can be formed solely of the impregnated felt 42 and without sheet 40. A further embodiment of this aspect of the invention provides for tubular sections of treated material to surround wires such as PVC drop wires. Since may fire codes require the use of fire retardant wires from the terminal to the hook-up point, i.e. house, an impregnated felt surrounding the portion of the PVC wire in the enclosure provides enhanced protection from the off-gassing of deleterious volatiles such as HCl. Additionally, treated felt tapes are suitable to wrap exposed wires.

The absorbant/adsorbant material is treated with a slury of acid scavenger or preferably an acid scavenger/antioxidant mixture. A preferred treatment process comprises dissolving 1 part antioxidant, e.g., Santonox R® in from about 4 to 50 parts and preferably about 30 parts alcohol, e.g., methanol, ethanol, isopropyl, and the like. This mixture is slurried with 1 part acid scavenger, e.g., calcium carbonate (Ca CO₃) to from about 5 parts to about 25 parts and preferably 14 parts alcohol/antioxidant solution. Thereafter the felt is exposed to and preferably saturated with the slurry. This takes from about 1 to about 30 seconds and preferably about 4 to 5 seconds. Finally, the felt is air dried or preferably oven dried greater than about 80°C and preferably greater than about 110°C.

Unexpectedly, the antioxidant acts as a binder for the acid scavenger. More specifically, the Santonox R® evidently holds the Ca CO₃ within the felt because unlike felts treated with only Ca CO₃, Ca CO₃ dust is not as prevalent.

The benefits of the invention shall be illustrated by referring to the attached Examples 1-11.

### Example 1 (Comparative)

Samples of Polyvinyl Chloride (PVC) materials weighing 0.5 grams were placed in glass bottles sealed by a cap from which hung an approximately 2-inch (5,1 cm) sample of an insulated copper wire conductor. A suitable bottle is a two-ounce (56,7 g) size flint glass bottle covered with aluminum foil and then capped with an aluminum foil lined phenolic resin screw-on cap (Fisher Scientific, Inc., Catalog No. 03-320-21C). The samples in bottles were placed into a circulating air oven at 90°C for aging. An unsealed, otherwise identical control sample was also hung in the oven at the same temperature.

Oxidation Induction Time (O.I.T.) of the polyolefin insulations was measured as described in Bellcore Technical Advisory No. TA-TSY-000421; September 1988 except that aluminum sample pans were used for both Foam-Skin and solid insulations. The O.I.T. was measured as the time, in minutes, to exotherm in pure oxygen at 200°C.

For samples with solid high density polyethylene insulation (HDPE), the initlal O.I.T. prior to aging was determined to be 150 ± 7 minutes. After 8 weeks, 12 weeks, and 16 weeks at 90°C, samples were measured and the results are shown in Table 1. Samples of foam-skin HDPE insulation were also tested, and measured after two weeks with the initial O.I.T. being 14 ± 1 minute in this case. Prior to aging the foam-skin insulations, the filling compound was removed by wiping with a clean paper towel.

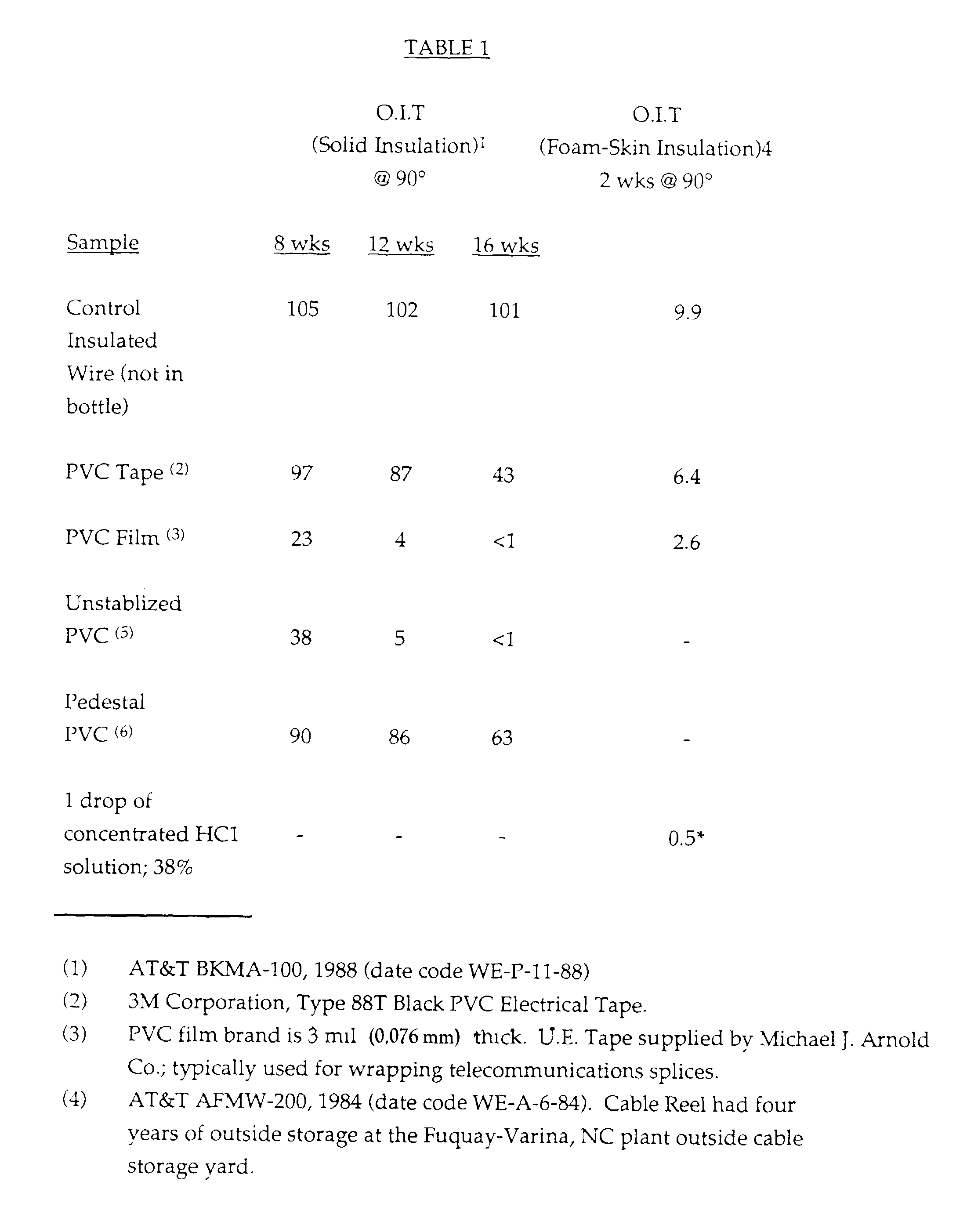

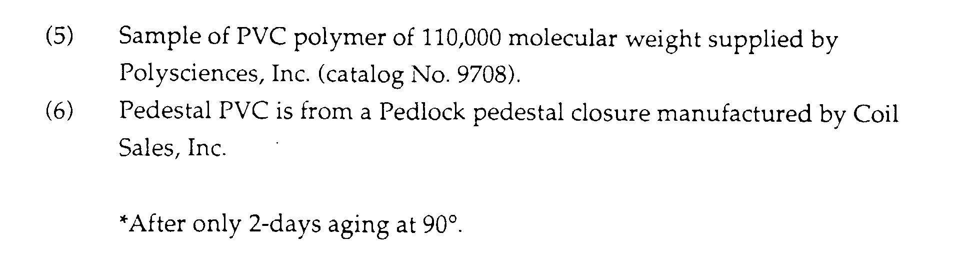

This Example demonstrate the adverse effects of exposure to PVC at temperatures of only 90°C on HDPE.

### Example 2 (Comparative)

The experiment of Example 1 was repeated to examine a range of other materials besides PVC-type materials. The O.I.T. was measured on solid HDPE insulation after exposure in sealed bottles to 0 . 5 gram samples of the various materials . The samples were aged for 5 weeks at 90°C. The initial O.I.T. of the insulation is 150 ± 7 minutes. The results are shown in Table 2.

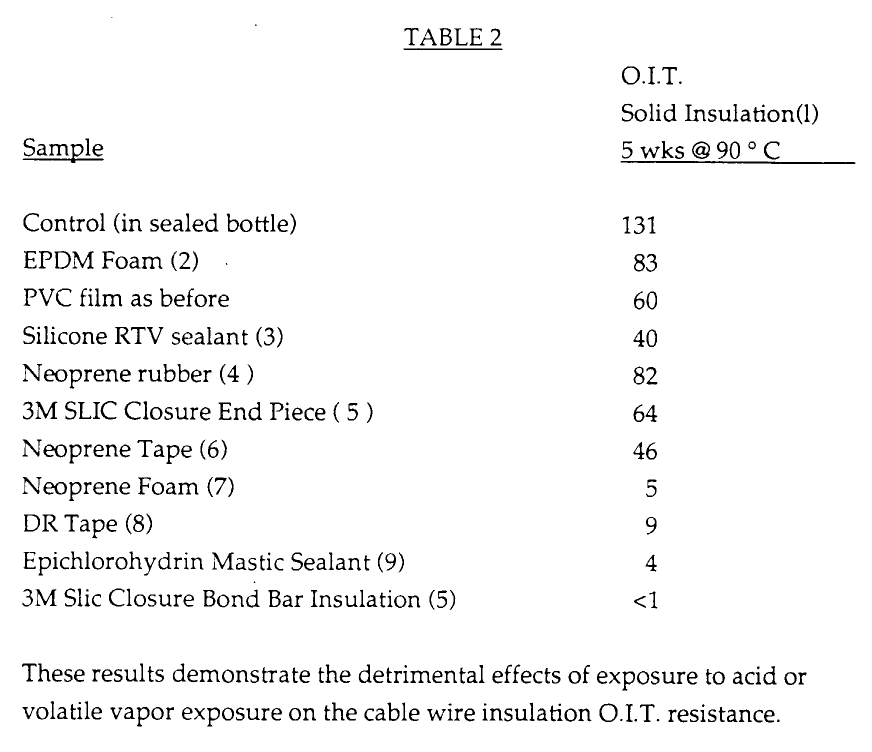

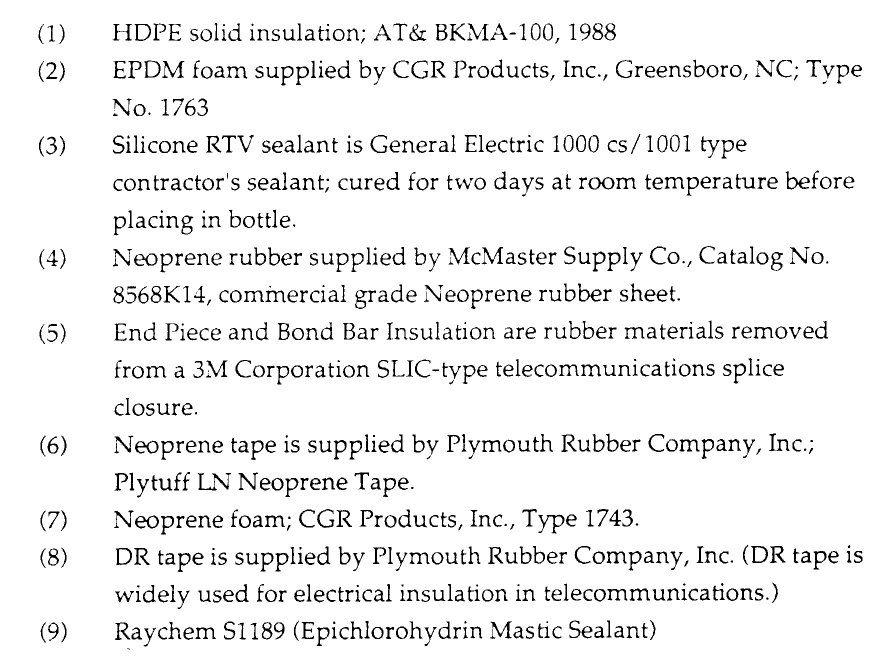

### Example 3 (Comparative)

A similar experiment to Example 1 was conducted for Polyvinylidene chloride films such as Saran® is presented in Table 3.

**TABLE 3**

| Sample | Insulation O.I.T. Min @ 200°C After 90°C Aging | | | | | | |
|---|---|---|---|---|---|---|---|
| | 1wk | 2 wks | 4 wks | 6 wks | 8 wks | 12 wks | 16 wks |
| | | | | | | | |
| Control (in sealed bottle) | 111 | 115 | 109 | 119 | 124 | 102 | 107 |
| | | | | | | | |
| Saran Film * | 76 | 51 | 4 | 4 | 1.5 | <1 | <1 |

Saran film is Dow Chemical's SaranWrap 3HY Plastic Wrap, Dow No. 4081733.

This demonstrates the degradative effects of halogenated polymers other than PVC on wire insulation oxidative stability.

### Example 4 (Comparative)

The experiment in Example 1 was repeated, one bottle with the PVC additionally contained an acid scavenger (Ascarite® II)1. The results are shown in Table 4. Solid HDPE insulation was tested (AT&T BKMA-100, 1988).

**TABLE 4**

| Sample | O.I.T.(4 wks @ 90°C) | O.I.T. 8 wks @ 90° | O.I.T. (16 wks @ 90°C) |
|---|---|---|---|
| Control (sealed bottle) | 109 | 119 | 107 |
| | | | |
| PVC (2) | 93 | 87 | 43 |
| | | | |
| PVC-acid scavenger (1) | 110 | 121 | 106 |

| | | | |
|---|---|---|---|
| (1) Ascarite® II, Thomas Scientific, Inc. (Sodium hydroxide on expanded Mica); 5 grams were placed in each bottle. | | | |
| (2) PVC is 3M 88T Black PVC Electrical Tape; 0.5 grams were placed in each bottle. | | | |

The results illustrate the beneficial effects of acid scavengers in protecting HDPE cable insulation from the degradative effect of exposure to PVC at 90°C.

### Example 5 (Comparative)

To demonstrate that the degradative effect of HCl does not depend on the presence of O₂ samples of foam-skin insulation¹ were evaluated in both air and nitrogen similar to Examples 1, 2, 3, and 4. Measurements were taken after 2 days aging at 90°C, and are shown in Table 5.

**TABLE 5**

| Sample | O.I.T (2 days @ 90°C) |
|---|---|
| Ungaged insulated wire | 12.9 ± 1.0 |
| Aged in air | 11.3 ± 1.0 |
| Aged in nitrogen | 14.9 ± 2.0 |
| Aged in air with 1 drop concentrated HCl solution | 0.5 ± 0.2 |
| Aged in Nitrogen with 1 drop concentrated HCl solution | 2.7 ± 1.0 |

¹ Insulation is AT&T AFMW-200, 1984 from Example 1

These results indicate the rapid loss of insulation oxidative stability in an inert atmosphere which indicates that the degradation of stability still occurs, essentially as rapidly, in the absence of oxygen.

### Example 6

Experiments were performed on solid HDPE insulation, AT&T BKMA-100, 1988, i.e., unfilled insulated wire and incorporating acid scavenger and antioxidant in a protective package. The samples evaluated were different telecommunications closures, with the insulation placed inside in a normal telephone cable splice arrangement. The samples were aged at 110°C for 4 weeks. The initial O.I.T. was 149 ± 4 minutes @ 200°C. The results are given in Table 6. The strippability index was also measured to evaluate adhesion of the insulation to the upper conductor. This was determined according to the following procedure:
- A 3" (7,6 cm) long piece of insulation with conductor is removed from desired sample after aging.
- Into the upper jaw of a tensile test machine is placed a 24-gauge wire stripper (modified to fit the jaw). (Available from Harris Corporation, Dracon Division.)
- At ½" (1,26 cm) from the end of the conductor, the insulation is slipped into the stripping notch of the stripper.
- The tensile testing machine is pulled at a cross-head speed of 50 mm/min.
- Rapid buildup of force, then rapid loss indicates good strippability, i.e., low adhesion to copper.
- Rapid buildup of force, then prolonged fluctuating high force (caused by abrasive cutting of insulation by stripper) indicates poor stripping.

For samples with a protective package, the protective materials were placed in a heat-sealed Tyvek⁽²⁾ Pouch. Tyvek® is a non-woven polyethylene fabric supplied by Dupont. 10 grams of Santonox R® was used as the antioxidant. 20 grams of Ascarite® II was used as the acid scavenger. For samples containing both antioxidant and acid scavenger, both materials were mixed in one Tyvek® Pouch. Separate silica gel dessicant pouches were included as indicated in the sample descriptions, i.e., two 15 grams dessicant pouches in each closure. The Silica gel dessicant pouches were products of Multiform Dessicants, Inc.

**TABLE 6**

| Sample | O.I.T After Aging (4 wks @ 110°C) (min @ 200°C) | Strippability |
|---|---|---|
| Exposed Insulation (Jacket removed from cable) | 113 | Good |
| | | |
| Sealed Insulation (Jacket of cable intact, ends sealed) | 115 | Good |
| | | |
| Heat-shrink Sealed Closure with PVC Tape, Antioxidant and Dessicant | 121 | Poor |
| | | |
| Heat-shrink Sealed Closure with PVC Tape, Antioxidant, Acid Scavenger, and Dessicant | 173 | Good |
| | | |
| Heat-srink Sealed Closure with PVC Tape and Dessicant | 96 | Poor |
| | | |
| AT&T Type 18A free-breathing closure with flexible PVC body | 78 | Poor |
| | | |
| 3M A2-RB free-breathing closure with rigid PVC body | 23 | Poor |
| | | |
| Reliable electric 400-0 free-breathing closure with flexible Neoprene rubber body | 50 | Poor |
| | | |
| Raychem TRAC A free-breathing closure with polyolefin body | 113 | Good |
| | | |
| 3M PST #4634 sealed pedestal closure (with PVC tape and PVC film) | 38 | Poor |
| | | |
| Raychem Pedcap RM-3 sealed pedestal closure (with PVC tape, antioxidant, acid scavenger, and dessicant) | 117 | Good |
| | | |
| Coil Sales, Inc. CPLG-6 free-breathing pedestal (with rigid PVC body) | 1 | Poor |

This demonstrates the benefits derived from the use of nonhalogenated closure systems and the beneficial effects of a combined acid scavenger, antioxidant and dessicant system. To maintain effective strippability of copper wire, an acid scavenger is beneficial.

### Example 7 (Comparative)

An experiment similar to Example 1 was conducted on foam-skin cleaned wire insulation in the presence of greater than about 90% relative humidity. The specific wire was AT&T AFMW-100, 1988 (date code WE-AK-11-88). The cable reel containing the wire was placed in an oven at about 60°C for about 4 weeks to allow filling compound to extract antioxidant from the interior wire. Thereafter wire samples were exposed to the environments in Table 7.

**TABLE 7**

| | O.I.T. @ 90°C | | |
|---|---|---|---|
| Sample | 1 wk | 2 wk | 3 wk |
| Unaged control⁽¹⁾ | 45.0 ± 4 | 45.0 ± 4 | 45.0 ± 4 |
| Aged control with dessicant⁽²⁾ | 44.5 ± 3.5 | 38.0 + 3.5 | 41.4 ± 2.7 |
| Distilled water (humidity)⁽³⁾ (not in contact with wire) | 31.0 ± 1.7 | 16.7 ± 1.3 | 13.9 ± 1.2 |

| | | | |
|---|---|---|---|
| (1) Unaged control O.I.T. is measured after cable conditioning of 4 weeks at 60°C. | | | |
| (2) 5 grams of silica gel dessicant used. | | | |
| (3) 5 grams of distilled deionized water. | | | |

The results indicate the effectiveness of dessicant in maintaining an O.I.T. value. The results also indicate the reduction of O.I.T. after exposure to a humid atmosphere.

### Example 8

A series of six PVC pedestal samples were constructed and placed into a 110°C circulating air oven for four weeks. Inside each pedestal was placed an exposed telephone cable looped to simulate a cable splice. The cable was an AT&T BKMA-100 with solid HDPE insulation having an unaged O.I.T. of 154 ± 6 min.

The sample configurations were varied with and without Pedcap RE-3 closures and acid scavenger/antioxidant packages. The acid scavenger/antioxidant packages were sealed Tyvek pouches with 30 grams Ascarite and 10 grams Santonox R. Sample descriptions are further indicated in Table 8.

After oven aging, four of the pedestals were subjected to a draeger gas analysis test to determine the presence/absence of HCl gas. A suitable detector tube is available from Lab Safety Supply Company, Catalog No. EB-4629. The tube is a glass ampule manufactured by National Draeger Co., which contains a color indicator that detects HCl gas in the 1 to 25 parts per million (ppm) range. Typically, both ends of the tubular ampule are broken, and one end is inserted into a hand-activated bellows suction air pump. To measure HCl gas, air is sucked through the tube by the pump with a fixed-number of pump strokes which is required to accurately record the HCl concentration. A color change from blue to yellow indicates presence of HCl. The length of color change along the length of the tube indicates the HCl concentration.

To measure HCl in the pedestal, it was necessary to drill a hole in the sample immediately after removing from the aging oven. Through this hole, any HCl could be measured. For samples with Pedcaps, HCl was measured both outside and inside the Pedcap.

Results for the HCl detection test are listed below with O.I.T. results for the insulation after aging. O.I.T. samples were removed from the top, center, and bottom of the splices.

**TABLE 8**

| | Sample | O.I.T. (Min @ 200°C) | | | HC1 Gas |
|---|---|---|---|---|---|
| Sample | Configuration | Top | Center | Bottom | Level (PPM) |
| 1 | PVC Pedestal ⁽¹⁾ | 2 | 1 | 1 | 6 |
| 2 | PVC Pedestal ⁽¹⁾ | 3 | 1 | 4 | 5 |
| 3 | PVC Pedestal with Pedcap ® closure containing the acid scavenger and antioxidant around the cable splice | 124 | 108 | 133 | 8 outside Pedcap >1 Inside Pedcap |
| 4 | PVC Pedestal with Pedcap ® closure containing the acid scavenger and antioxidant around the cable splice | 99 | 122 | 133 | Not Measured |
| 5 | PVC Pedestal with an inside Pedcap ® closure around the cable splice | 121 | 118 | 113 | 3 outside Pedcap >1 inside Pedcap |
| 6 | PVC Pedestal with an Pedcap ® closure around the cable splice | 84 | 1 | 1⁽²⁾ | Not measured |

| | | | | | |
|---|---|---|---|---|---|
| (1) PVC Pedestal is manufactured by Coil Sales Inc., Pedlock CPLG-4-pedestal | | | | | |
| (2) This sample had excessive flow of the mastic sealant used to seal the bottom of the Pedcap dome. This resulted in exposing the splice atmosphere to the DR tape's volatile by products. | | | | | |

This tape is typically used during the product installation. DR Tape affects insulation stability as illustrated by Example 2.

These O.I.T results indicate the beneficial effect of using polyolefin interior enclosures and well as using antioxidant and acid scavengers in PVC pedestal closures.

### Example 9 (Comparative)

An experiment similar to Examples 1 and 6 was performed however, insulations with and without copper conductor were aged at 90°C for 8 weeks. The insulation was solid HDPE (AT&T BKMA-100, 1988) with an unaged O.I.T. of 154 ± 5 min. Results are listed in Table 9.

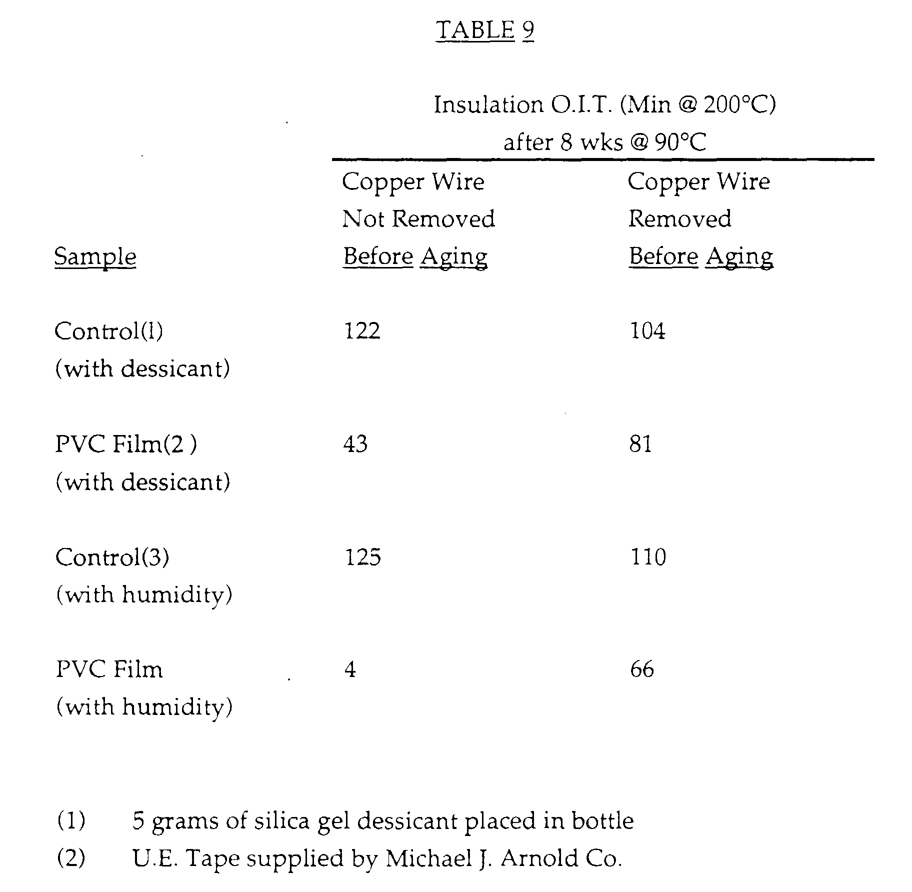

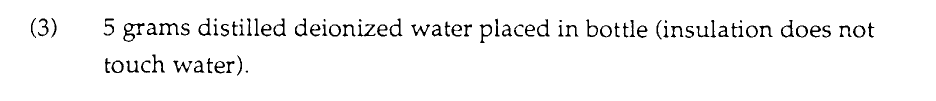

This demonstrates the deleterous effects of PVC on wire insulation oxidative stability is increased in the presence of humidity and in the presence of the core copper wire.

### Example 10 (Comparative)

In this experiment, a pedestal closure, Pedcap RM-3® closure, was installed over a telephone cable looped to simulate a cable splice. The cable was a filled foam-skin, 100 pair cable (AT&T AFMW-100, with about 6 feet of the cable exposed to the air outside the pedestal closure. The exposed cut ends were covered with a heat-shrinkable cap, VAAC-200®, and a pinhole was made in the cap to allow free air exchange up the cable length.

Prior to installing the pedestal closure, an oxygen gas sensor was inserted inside the pedestal closure near the splice area. The oxygen sensor electrical cable was embedded in the mastic seal of the closure to prevent gas leaks up the sensor cable. The oxygen content inside the sealed pedestal closure could be measured with a digital monitor located outside the closure. A suitable sensor/ monitor is model GC-301, manufactured by G.C. Industries.

Also prior to installing the pedestal closure, an oxygen scavenger was placed near the splice area. Six packages of Ageless Z-500 available from Misubishi Gas Chemicals were used as the oxygen scavenger. Each individual scavenger package is capable of absorbing at least 500 cc. of pure oxygen, so, that the total oxygen absorption capacity inside the closure was about 3 liters of pure oxygen. Since oxygen is only about 20% of the earth's atmosphere, the oxygen scavenger used could remove the oxygen from about 15 liters of air. The capacity of a Pedcap RM-3® is only a few liters, there was encough oxygen scavenger used to absorb substantially all the °2 in the closure.

Immediately after sealing the closure with internal oxygen scavenger and oxygen monitor, the oxygen level was measured versus time. Data for oxygen level is listed in Table 10:

**TABLE 10**

| Elapsed Time (hours) | % Oxygen Measured Inside Pedestal Closure |
|---|---|
| 0 | 20.9% |
| 1 | 6 5% |
| 2 | 2 0% |
| 3 | 0.7% |
| 4 | 0.1 % |
| 5 | 0.1% |
| 24 | <0.1% |

Since 0.1% oxygen is the lowest oxygen concentration that the sensor used could measure, the actual oxygen concentration could have been less than 0.1% after 24 hours.

This data demonstrates the ability of oxygen scavengers to remove oxygen from sealed pedestal closures with filled telephone cables.

### Example 11 (Comparative)

A sample of 20 grams of PVC film, U.E. Tape (see footnote 3 of Table 1), was placed in a 50 ml stoppered flask having an inlet and outlet. The flask was placed in a constant temperature water bath at 60°C. Air was circulated through the flask and over the sample and thereafter passed through a slightly alkaline solution of distilled water with sodium hydroxide for about eight weeks.

An analysis of the water after about eight weeks showed the presence of chloride ions while no chloride ions were detected in a control sample. This demonstrates the degradation of PVC to give HCl gas at only 60°C. (A temperature that is known to occur in above ground telephone enclosures.)

The patent application 90908352.9 provides a method for preventing degradation of the polyolefin wire insulation in a cable splice which comprises:
surrounding a cable splice with an enclosure;
placing an effective amount of an acid scavenger within the enclosure; and
sealing the closure around the cable splice.

The container is preferably selected from the group consisting of heat-shrinkable plastic enclosures, metal enclosures, and non heat-shrinkable plastic enclosures or combinations thereof. Preferably the plastic enclosures are fabricated from nonhalogenated plastics. Preferably the plastic enclosures are polyolefin plastics. Preferably the acid scavenger has a pH greater than about pH 5.

Preferably the placing is achieved by spraying the interior wires and the enclosure, and enclosure components, with an acid scavenger. The method preferably further comprises adding a dessicant to the enclosure.

Preferably the acid scavengers are selected from the group consisting of metallic oxides, metallic carbonates, metallic hydroxides, organic amines, inorganic amines, organic epoxides, and basic organic or inorganic salts. In the method preferably the acid scavenger is selected from the group consisting of zinc oxide, calcium oxide, lime, dibasic lead phthalate, sodium carbonate, calcium carbonate, sodium hydroxide, Ascarite®, sodium bicarbonate, calcium hydroxide, ammonia, amines, epoxy compounds, epoxidized soybean oil, barium stearate, cadmium stearate, zinc stearate, barium carboxylates, cadmium carboxylate, zinc carboxylate, dibasic lead phosphite, tribasic lead sulphate, sodium phosphate, and dialkyl tindichloride. Preferably the acid scavenger is from about 0.0005 to about 4 grams per gram of wire insulation. The acid scavenger is preferably from about 0.5 to about 2.0 grams per gram of wire insulation. The placing is preferably done by surrounding the cable splice with an acid scavenger treated article selected from the group consisting of a felt bag, a felt tube, a felt tape, felt sheets, and combinations thereof. The acid scavenger is preferably selected from the group consisting of sodium carbonate, calcium carbonate, sodium bicarbonate, sodium hydroxide, calcium oxide, or zinc oxide. Preferably the acid scavenger is from about 0.2 to 1 gram per gram of wire insulation.

The method preferably further comprises placing an antioxidant within the enclosure. The antioxidant is preferably selected from the group consisting of tris (3,5-di-tert-butyl-4-hydroxybenzyl) isocyanurate; tetrakis [(methylene3-(3',5'-di-t-butyl-4'-hydroxyphenyl)]propionate methane; octadecyl 3-(3',5',-di-tert-butyl-4'-hydroxyphenyl)propionate; 4,4'thiobis-(6-tert-butyl meta cresol); 4,4'-butylidene bis(6-tert-butyl meta cresol); 1,3,5-trimethyl-2,4,6-tris (3,5,-di-tert-butyl-4-hydroxybenzyl) benzene; 2,2'-Ethylidene-bis (4,6-di-tert-butyl phenol); 2,2'-methylene-bis-(4-methyl-6-tert-butyl phenol); 4,4' Di (alpha, alpha-dimethylbenzyl) diphenylamine; 1,1,3-tris (2 methyl)-4-hydroxy-5-tert-butylphenyl butane; 2,2' Methylene bis (4-ethyl-6-tert-butyl phenol); 4,4'-methylene-bis-(2,6-di-tert-butylphenol); or alkylated hydroquinone. Preferably the antioxidant is from about 0.001 to about 0.5 grams per gram of wire insulation.

The antioxidant is preferably selected from the group consisting of 4,4' thiobis-(6-tert-butyl meta cresol); 4,4'-butylidene bis (6-tert-butyl meta cresol); 1,3,5-trimethyl-2,4,6-tris (3,5,-di-tert-butyl-4-hydroxybenzyl) benzene; 2,2'-methylene-bis-(4-methyl-6-tert-butyl phenol); 4,4' Di (alpha, alpha-dimethylbenzyl) diphenylamine; 1,1,3-tris (2 methylk)-4-hydroxy-5-tert-butylphenyl butane 2,2' Methylene bis (4-ethyl-6-tert-butyl phenol); or 4,4'-methylene-bis-(2,6-di-tert-butylphenol). In the method, the placing is preferably done by surrounding the cable splice with an acid scavenger/antioxidant treated article selected from the group consisting of a felt bag, a felt tube, a felt tape, felt sheets, and combinations thereof. The antioxidant is preferably from about 0.05 to about 0.2 grams per gram of wire insulation.

The method desirably further comprises adding an oxygen scavenger. The oxygen scavenger is preferably present in an amount sufficient to reduce the oxygen content of the closed enclosure to about 0.1% oxygen. The oxygen scavenger is preferably selected from the group consisting of ascorbic acid, furous sulfate with dessicants, activated iron powder, Ridox®, Santonox R® with sodium hydroxide, and Ageless®.

The method may advantageously further comprise adding a dessicant to the enclosure. The dessicant is preferably Drierite® or silica gel.

The patent application 90908352.9 also provides an apparatus for enclosing the insulated polyolefin wires of a cable splice, the improvement comprising:
an effective amount of an acid scavenger in the enclosure apparatus to retard polyolefin wire insulation degradation.

The acid scavengers are preferably selected from the group consisting of metallic oxides, metallic carbonates, metallic hydroxides, organic amines, inorganic amines, organic epoxides, and basic organic or inorganic salts. Preferably, the acid scavenger is from about 0.0005 to about 4 grams per gram of wire insulation. The acid scavenger may advantageously be in the form selected from the group consisting of an aerosol spray, a package of acid scavenger, a liner coated with acid scavenger, a block of acid scavenger, a gel including acid scavenger, a felt bag treated with an acid scavenger sized to substantially surround the polyolefin wires or cable, a felt tube treated with an acid scavenger and optionally an antioxidant, a felt tape, treated with an acid scavenger and optionally an antioxidant, felt sheets treated with an acid scavenger and optionally an antioxidant, an encapsulated acid scavenger released over time and/or temperature or both, and combinations thereof.

It also provides an apparatus for sealing the polyolefin wires in cable splices against degradation, the improvement comprising:
fabricating the enclosure from materials which do not provide acid moities or volatile components upon degradation which attack the polyolefin insulation. Preferably the enclosure is fabricated from polyolefin materials in the absence of halogenated-based plastics, silicone-based elastomers which cure to release acetic acid, and sulfur or peroxide-cured plastics and elastomers. The apparatus may further comprise a felt treated with an acid scavenger capable of substantially surrounding the wires or cables to be protected.

The invention provides an article as defined in the claims for protecting insulated wires capable of being placed in a cable splice enclosure which comprises an effective amount of an acid scavenger to counter the effects of materials used in the enclosure which upon degradation produce acid moities or volatile components which attack the polyolefin insulation when utilized within the enclosure. The article preferably further comprises a dessicant in conjunction with the acid scavenger. The acid scavengers are preferably selected from the group consisting of metallic oxides, metallic carbonates, metallic hydroxides, organic amines, inorganic amines, organic epoxides, and basic organic or inorganic salts. Preferably, the acid scavenger is from about 0.0005 to about 4 grams per gram of wire insulation. Advantageously, the acid scavenger may be selected from the group consisting of zinc oxide, calcium oxide lime, dibasic lead phthalate, sodium carbonate, calcium carbonate, sodium hydroxide, Ascarite ®, sodium bicarbonate, calcium hydroxide, ammonia, amines, epoxy compounds, epoxidized soybean oil, zinc stearates of barium, cadmium or zinc, carboxylates of barium or cadmium, dibasic lead phosphite, tribasic lead sulphate, sodium phosphate, or dialkyl tindichloride. The acid scavenger is preferably from about 0.5 to about 2.0 grams per gram of wire insulation. Preferably, the acid scavenger is selected from the group consisting of sodium carbonate, calcium carbonate, sodium bicarbonate, sodium hydroxide, calcium oxide, or zinc oxide. The acid scavenger of the article is preferably from about 0.2 to 1 gram per gram of wire insulation.

The article according to the invention preferably further comprises an antioxidant. The article is preferably selected from the group consisting of a felt bag treated with acid scavenger and antioxidant capable of surrounding the polyolefin wires or cable, a tubular felt article treated with an effective amount of the acid scavenger and antioxidant, the tubular article capable of surrounding wires having insulations deleterious to polyolefin wires, and combinations of these articles. Preferably the antioxidant is from about 0.001 to about 0.5 grams per gram of wire insulation. The antioxidant is preferably selected from the group consisting of tris (3,5-di-tert-butyl-4-hydroxybenzyl) isocyanurate; tetrakis [(methylene3-(3', 5'-di-t-butyl-4'-hydroxyphenyl)] propionate methane; octadecyl 3-(3', 5',-di-tert-butyl-4'-hydroxyphenyl) propionate; 4,4' thiobis-(6-tert-butyl meta cresol); 4,4'-butylidene bis (6-tert-butyl meta cresol); 1,3,5-trimethyl-2,4,6-tris (3,5,-di-tert-butyl-4-hydroxybenzyl) benzene; 2,2'-Ethylidene-bis (4,6-di-tert-butyl phenol); 2,2'-methylene-bis-(4-methyl-6-tert-butyl phenol); 4,4 Di (alpha, alpha-dimethylbenzyl) diphenylamine; 1,1,3-tris (2 methyl)-4-hydroxy-5-tert-butylphenyl butane; 2,2' Methylene bis (4-ethyl-6-tert-butyl phenol); 4,4' -methylene-bis-(2,6-di-tert-butylphenol); or alkylated hydroquinone. The acid scavenger is preferably in the form of a belt bag impregnated with the acid scavenger and optionally an antioxidant, an encapsulated acid scavenger released over time and/or temperature or both. Preferably, the acid scavenger is in the form of a felt bag impregnated with the acid scavenger released over time and / or temperature of both.

The patent application 90908352.9 additionally provides a kit-of-parts for enclosing the insulated polyolefin wires in a cable splice comprising:
a splice closure; and
an effective amount of an acid scavenger to inhibit the degradation of the polyolefin wire insulation from degrading acid moities. The acid scavenger is preferably in the form selected from the group consisting of an aerosol spray, a package of acid scavenger, a liner coated with acid scavenger, a block of acid scavenger, a gel including acid scavenger, a felt bag impregnated with the acid scavenger and optionally an antioxidant, a felt tube impregnated with the acid scavenger and optionally an antioxidant, a felt sheet(s) impregnated with the acid scavenger and optionally an antioxidant, an encapsulated acid scavenger released over time and/or temperature of both, and combinations thereof. The acid scavengers are preferably selected from the group consisting of metallic oxides, metallic carbonates, metallic hydroxides, organic amines, organic epoxides, and basic organic or inorganic salts. The acid scavenger is preferably from about 0.0005 to about 4 grams per gram of wire insulation. Preferably an antioxidant is placed within the enclosure. The felt bag is preferably surrounded by an MVT bag. The MVT bag preferably adheres to the felt bag on a side opposite to the side in communication with the polyolefin wires or cable. The kit preferably further includes felt tube(s) which contain an effective amount of an acid scavenger therein and are capable of surrounding wires insulated with insulations deleterious to polyolefin wires within the splice enclosure.

## Claims

1. An article comprising:
a felt material; and
a concentration of acid scavenger of from 1.55 g/m² to 1550g/m² adsorbed or absorbed into or onto the felt.

2. The article according to Claim 1 wherein the felt is a polyolefin felt.

3. The article according to Claim 2 further including an antioxidant absorbed or adsorbed onto or into the felt in an amount of from 1.55 g/m² to 1550 g/m².

## Patentansprüche

1. Gegenstand, der folgendes aufweist:
ein Filzmaterial, und
eine Konzentration eines Säureabfallmittels, das in einer Menge von 1,55 g/m² bis 1550 g/m² an dem Filz adsorbiert oder in dem Filz absorbiert ist.

2. Gegenstand nach Anspruch 1,
dadurch gekennzeichnet,
daß der Filz ein Polyolefinfilz ist.

3. Gegenstand nach Anspruch 2,
der weiterhin ein Antioxidationsmittel enthält, das in einer Menge von 1,55 g/m² bis 1550 g/m² an dem Filz adsorbiert oder in dem Filz absorbiert ist.

## Revendications

1. Article comprenant :
un matériau en feutre ; et
une concentration de fixateur d'acide comprise entre 1,55 et 1550 g/m², absorbée par ou adsorbée sur le feutre.

2. Article selon la revendication 1, dans lequel le feutre est un feutre de polyoléfine.

3. Article selon la revendication 2, comprenant de plus un antioxydant absorbé par ou adsorbé sur le feutre, en une quantité comprise entre 1,55 et 1550 g/m².
